# EUROPEAN PATENT SPECIFICATION

(11) **EP 1 100 315 B1**
(45) Date of publication and mention of the grant of the patent: **03.03.2004**
(21) Application number: 00927969.6
(22) Date of filing: 10.05.2000
(51) Int. Cl.: A01K 1/01

(54) **AN UNMANNED VEHICLE ADAPTED TO BE USED IN A STABLE, SUCH AS A COWSHED**
UNBEMANNTES FAHRZEUG ZUR ANWENDUNG IN EINEM STALL, WIE EINEM KUHSTALL
VEHICLE SANS CONDUCTEUR POUR ETRE UTILISE PAR EXAMPLE DANS UNE ETABLE

(30) Priority: 25.05.1999 NL 1012139
(43) Date of publication of application: 23.05.2001
(73) Proprietor: Lely Enterprises AG, 6300 ZUG (CH)
(72) Inventor: VAN DEN BERG, Karel, NL-2971 BR Bleskensgraaf (NL)
(74) Representative: Corten, Maurice Jean F.M.
(86) International application number: PCT/NL2000/000310
(87) International publication number: WO 2000/070935

(56) References cited:
- EP-A- 0 943 235
- WO-A-96/14735
- WO-A-97/31524
- DE-A- 4 425 924
- US-A- 2 966 256
- US-A- 3 971 091
- US-A- 4 769 700
- US-A- 5 147 002
- US-A- 5 309 592

## Description

The invention relates to an unmanned vehicle according to the preamble of claim 1.

Such a vehicle is known from US 2,966,256. The known vehicle is provided at its front side with a manure slide with the aid of which the gutter floor of a stable is cleaned. '

It is an object of the invention to provide an alternative unmanned vehicle.

In accordance with the invention, this is achieved by the characterizing features of claim 1.

In accordance with an inventive feature, the manure displacing device comprises a manure slide which is preferably made of rubber or synthetic material. According to again another inventive feature, it is also possible to provide the manure displacing device with motor-drivable manure displacing members. The motor-drivable manure displacing members have the advantage that, during cleaning, they do not need to be pressed on the stable floor with considerable force, like a manure slide. According to a further inventive feature, the manure displacing members are constituted by brushes. It is also possible for the manure displacing device to comprise a compressed air unit and/or a spraying unit by means of which the floor is cleaned with compressed air and/or liquid.

For the purpose of realizing a still better cleaning of the stable floor, according to an inventive feature, the manure displacing device comprises pressure setting means with the aid of which the force is set with which the manure displacing device is active on the stable floor. In accordance with a further inventive feature, the pressure setting means comprise a control cylinder. The pressure setting means are also used for positioning the manure displacing device.

For the purpose of determining where in the stable there has to be cleaned, according to an inventive feature, the unmanned vehicle comprises detection means which are capable of observing the dirt present on the stable floor. According to a further inventive feature, the detection means comprise a camera, such as e.g. an infrared camera. It is further possible for the detection means to comprise a humidity meter with the aid of which the electric conductivity is determined on a floor part in the stable. By means of a dielectric measurement it is possible to determine whether the stable floor is contaminated with manure.

According to again another inventive feature, the unmanned vehicle comprises a second manure displacing device which is disposed below the vehicle. According to the invention, the second manure displacing device constitutes a support for the vehicle.

For the purpose of operating in a still more hygienic manner, the unmanned vehicle comprises cleaning and/or disinfecting means. According to a further inventive feature, the cleaning and/or disinfecting means comprise a spraying unit. With the aid of the spraying unit it is possible to spray a cleaning and/or a disinfecting liquid over the already cleaned stable floor. According to the invention, a favourable location for the cleaning and/or disinfecting means is on or near the manure displacing device. For the purpose of preventing the animals from damaging the unmanned vehicle, according to an inventive feature, the unmanned vehicle comprises signalling means which are adapted to keep animals at a distance from the unmanned vehicle. According to a further inventive feature, the signalling means are capable of emitting optical and/or acoustic signals. According to again another inventive feature, the signalling means comprise an electric shock device.

The invention further relates to a method of displacing manure over a stable floor by means of an unmanned vehicle, whereby the unmanned vehicle and/or the stable are/is provided with detection means for determining whether an animal has visited a cubicle after the relevant cubicle has been cleaned by means of the manure displacing device, while the detection means emit a control signal to the unmanned vehicle when said animal has left the cubicle, on the basis of which control signal the unmanned vehicle cleans the relevant cubicle with the aid of the manure displacing means.

The invention will now be explained in further detail with reference to the accompanying drawings.

Figure 1 is a side view of a first unmanned vehicle according to the invention, and

Figure 2 is a side view of a second unmanned vehicle according to the invention.

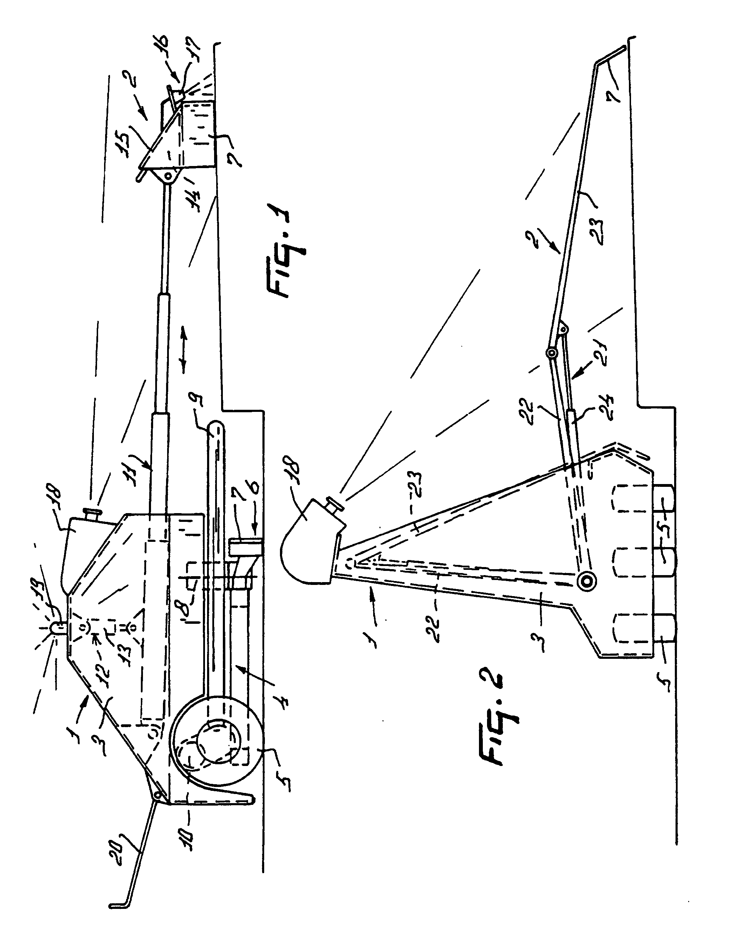

Figure 1 is a side view of a first unmanned vehicle 1 according to the invention, which vehicle is provided with a manure displacing device 2. The unmanned vehicle 1 comprises a housing 3 with a chassis 4 which is provided with wheels 5, which form the first point of support for the chassis 4, as well as a second manure displacing device 6, which forms a second point of support for the chassis 4. The second manure displacing device 6 comprises a manure slide 7. The unmanned vehicle 1 is further provided with a protective bracket 9 which is rotatable about an axis 8. Each of the wheels 5 is individually driven by a motor 10. By driving the wheels 5 at a different velocity, it is possible to steer the unmanned vehicle. The first manure displacing device 2 comprises a telescopic carrier 11 one end of which is hingeably disposed in the housing 3 of the unmanned vehicle 1. At the other end of the telescopic carrier 11 there is also disposed a manure slide 7. The housing 3 further accommodates pressure setting means 12 one end of which is connected to the housing 3 and whose other end is connected to the telescopic carrier 11. The pressure setting means 12 comprise a cylinder 13. By means of the cylinder 13 it is possible to set the force with which the manure slide 7 is pushed on the stable floor. For the purpose of increasing the pressure of the manure slide 7 on the stable floor and/or the cubicle floor, there is disposed a weight 14 above the manure slide 7 in a part 15 of the housing 3. Near the manure slide 7 there are further disposed disinfecting means 16 with the aid of which the floor, which has been scraped clean, is disinfected. The disinfecting means 16 comprise a spraying unit 17.

The unmanned vehicle 1 is further provided with detection means 18 with the aid of which contaminated parts of the stable floor can be traced and by means of which it is possible to pilot the unmanned vehicle 1 through the stable. In the present embodiment, the detection means 18 comprise a camera. The unmanned vehicle 1 is further provided with signalling means 19 which emit an optical and an acoustic signal.

The unmanned vehicle 1 also comprises an electric shock device which is connected to a bracket 20.

Figure 2 shows a second embodiment of an unmanned vehicle 1 according to the invention, in which parts corresponding to those of the first unmanned vehicle 1 are indicated by the same reference numerals. In the second embodiment of the invention the first manure displacing device 2 comprises a hingeable arm construction 21. The hingeable arm construction 21 comprises a first part 22, which is hingeably connected to the housing 3, and a second part 23 connected therewith and provided at its end with a manure slide 7. The hingeable arm construction 21 is operated by means of a control cylinder 24, one end of which is connected to the hinge pin of the first part 22 and whose other end is connected to the second part 23. Furthermore, in its folded up position, the second part 23 forms part of the housing 3.

## Claims

1. An unmanned vehicle (1) which is adapted to be used in a stable, such as a cowshed, said unmanned vehicle (1) comprising a housing (3) and comprising a manure displacing device (2), **characterized in that** the manure displacing device (2) comprises a telescopic carrier (11) and/or a hingeable arm construction (21) for moving the manure displacing device (2) from a position in which it forms part of the housing of the unmanned vehicle (1) to a position at a distance from the vehicle.

2. An unmanned vehicle as claimed in claim 1, **characterized in that** the manure displacing device (2) comprises a manure slide (7) which is preferably made of rubber or synthetic material.

3. An unmanned vehicle as claimed in claim 1 or 2, **characterized in that** the manure displacing device comprises motor-drivable manure displacing members and/or a spraying unit and/or a compressed air unit.

4. An unmanned vehicle as claimed in claim 3, **characterized in that** the manure displacing members are constituted by.brushes.

5. An unmanned vehicle as claimed in any one of the preceding claims, **characterized in that** the manure displacing device (2) comprises pressure setting means (12) for setting the force with which the manure displacing device (2) is active on a floor.

6. An unmanned vehicle as claimed in claim 5 **characterized in that** the pressure setting means (12) comprise a control cylinder (13).

7. An unmanned vehicle as claimed in any one of the preceding claims, **characterized in that** the unmanned vehicle (1) comprises detection means (18) for determining whether and/or where manure and/or other dirt are/is present on the stable floor.

8. An unmanned vehicle as claimed in claim 7, **characterized in that** the detection means (18) comprise a camera, such as e.g. an infrared camera.

9. An unmanned vehicle as claimed in claim 7 or 8, **characterized in that** the detection means comprise a humidity meter for determining the electric conductivity on a floor part in the stable.

10. An unmanned vehicle as claimed in any one of the preceding claims, **characterized in that** the unmanned vehicle (1) comprises a second manure displacing device (6) which is disposed below the vehicle.

11. An unmanned vehicle as claimed in any one of the preceding claims, **characterized in that** the second manure displacing device (6) constitutes a support for the vehicle.

12. An unmanned vehicle as claimed in any one of the preceding claims, **characterized in that** the unmanned vehicle (1) comprises cleaning and/or disinfecting means (16).

13. An unmanned vehicle as claimed in claim 12, **characterized in that** the cleaning and/or disinfecting means (16) comprise a spraying unit (17).

14. An unmanned vehicle as claimed in claim 12 or 13, **characterized in that** the cleaning and/or disinfecting means (16) are disposed on the manure displacing device (2).

15. An unmanned vehicle as claimed in any one of the preceding claims, **characterized in that** the unmanned vehicle (1) comprises signalling means (19) which are adapted to keep the animals at a distance from the unmanned vehicle.

16. An unmanned vehicle as claimed in claim 15, **characterized in that** the signalling means (19) emit optic and/or acoustical signals.

17. An unmanned vehicle as claimed in claim 15 or 16, **characterized in that** the signalling means (19) comprise an electric shock device.

18. A method of displacing manure over a stable floor by means of an unmanned vehicle provided with a manure displacing device as claimed in any one of claims 1 to 17, whereby the unmanned vehicle and/or the stable are/is provided with detection means for determining whether an animal has visited a cubicle after the relevant cubicle has been cleaned by means of the manure displacing device, while the detection means emit a control signal to the unmanned vehicle when said animal has left the cubicle, on the basis of which control signal the unmanned vehicle cleans the relevant cubicle with the aid of the manure displacing means.

## Patentansprüche

1. Unbemanntes Fahrzeug (1), das zur Verwendung in einem Stall, wie z. B. einem Kuhstall, geeignet ist, wobei das unbemannte Fahrzeug (1) ein Gehäuse (3) und eine Mistverlagerungsvorrichtung (2) umfaßt,
**dadurch gekennzeichnet, daß** die Mistverlagerungsvorrichtung (2) einen Teleskopträger (11) und/oder eine Schwenkarmvorrichtung (21) umfaßt, um die Mistverlagerungsvorrichtung (2) von einer Position, in der sie Teil des Gehäuses des unbemannten Fahrzeuges (1) ist, in eine Position zu bewegen, in der sie einen Abstand zum Fahrzeug hat.

2. Unbemanntes Fahrzeug nach Anspruch 1,
**dadurch gekennzeichnet, daß** die Mistverlagerungsvorrichtung (2) einen Mistschieber (7) umfaßt, der vorzugsweise aus Gummi oder Kunststoff hergestellt ist.

3. Unbemanntes Fahrzeug nach Anspruch 1 oder 2,
**dadurch gekennzeichnet, daß** die Mistverlagerungsvorrichtung motorisch antreibbare Mistverlagerungsglieder und/oder eine Sprühvorrichtung und/oder eine Druckluftvorrichtung umfaßt.

4. Unbemanntes Fahrzeug nach Anspruch 3,
**dadurch gekennzeichnet, daß** die Mistverlagerungsglieder durch Bürsten gebildet sind.

5. Unbemanntes Fahrzeug nach einem der vorhergehenden Ansprüche,
**dadurch gekennzeichnet, daß** die Mistverlagerungsvorrichtung (2) Druckeinstellvorrichtungen (12) umfaßt, um die Kraft einzustellen, mit der die Mistverlagerungsvorrichtung (2) auf einem Boden wirksam ist.

6. Unbemanntes Fahrzeug nach Anspruch 5,
**dadurch gekennzeichnet, daß** die Druckeinstellvorrichtung (12) einen Steuerzylinder (13) umfaßt.

7. Unbemanntes Fahrzeug nach einem der vorhergehenden Ansprüche,
**dadurch gekennzeichnet, daß** das unbemannte Fahrzeug (1) eine Ermittlungsvorrichtung (18) umfaßt, um zu ermitteln, ob und/oder wo sich Mist und/oder anderer Schmutz auf dem Stallboden befindet.

8. Unbemanntes Fahrzeug nach Anspruch 7,
**dadurch gekennzeichnet, daß** die Ermittlungsvorrichtung (18) eine Kamera, wie z. B. eine Infrarot-Kamera, umfaßt.

9. Unbemanntes Fahrzeug nach Anspruch 7 oder 8,
**dadurch gekennzeichnet, daß** die Ermittlungsvorrichtung einen Feuchtigkeitsmesser umfaßt, um die elektrische Leitfähigkeit auf einem Bodenteil in dem Stall zu ermitteln.

10. Unbemanntes Fahrzeug nach einem der vorhergehenden Ansprüche,
**dadurch gekennzeichnet, daß** das unbemannte Fahrzeug (1) eine zweite Mistverlagerungsvorrichtung (6) umfaßt, die unter dem Fahrzeug angeordnet ist.

11. Unbemanntes Fahrzeug nach einem der vorhergehenden Ansprüche,
**dadurch gekennzeichnet, daß** die zweite Mistverlagerungsvorrichtung (6) eine Stütze für das Fahrzeug bildet.

12. Unbemanntes Fahrzeug nach einem der vorhergehenden Ansprüche,
**dadurch gekennzeichnet, daß** das unbemannte Fahrzeug (1) eine Reinigungs- und/oder Desinfektionsvorrichtung (16) umfaßt.

13. Unbemanntes Fahrzeug nach Anspruch 12,
**dadurch gekennzeichnet, daß** die Reinigungs- und/oder Desinfektionsvorrichtung (16) eine Sprühvorrichtung (17) umfaßt.

14. Unbemanntes Fahrzeug nach Anspruch 12 oder 13,
**dadurch gekennzeichnet, daß** die Reinigungs- und/oder Desinfektionsvorrichtung (16) an der Mistverlagerungsvorrichtung (2) angeordnet ist.

15. Unbemanntes Fahrzeug nach einem der vorhergehenden Ansprüche,
**dadurch gekennzeichnet, daß** das unbemannte Fahrzeug (1) eine Signalvorrichtung (19) umfaßt, die dazu ausgelegt ist, die Tiere auf Abstand zu dem unbemannten Fahrzeug zu halten.

16. Unbemanntes Fahrzeug nach Anspruch 15,
**dadurch gekennzeichnet, daß** die Signalvorrichtung (19) optische und/oder akustische Signale aussendet.

17. Unbemanntes Fahrzeug nach Anspruch 15 oder 16,
**dadurch gekennzeichnet, daß** die Signalvorrichtung (19) eine Elektroschockvorrichtung umfaßt.

18. Verfahren zur Verlagerung von Mist auf einem Stallboden mit Hilfe eines unbemannten Fahrzeugs, das mit einer Mistverlagerungsvorrichtung nach einem der Ansprüche 1 bis 17 versehen ist, wobei das unbemannte Fahrzeug und/oder der Stall mit einer Ermittlungsvorrichtung versehen sind/ist, um zu ermitteln, ob ein Tier eine Box aufgesucht hat, nachdem die betreffende Box mittels der Mistverlagerungsvorrichtung gereinigt worden ist, wobei die Ermittlungsvorrichtung ein Steuersignal an das unbemannte Fahrzeug gibt, wenn das Tier die Box verlassen hat, wobei das unbemannte Fahrzeug aufgrund des Steuersignals die betreffende Box mit Hilfe der Mistverlagerungsvorrichtung reinigt.

## Revendications

1. Véhicule téléguidé (1) qui est adapté pour être utilisé dans une étable, tel qu'une étable à vaches, ledit véhicule téléguidé (1) comprenant un logement (3) et comprenant un dispositif de déplacement de fumier (2), **caractérisé en ce que** le dispositif de déplacement de fumier (2) comprend un chariot télescopique (11) et/ou une construction à bras articulable (21) pour déplacer le dispositif de déplacement de fumier (2) depuis une position dans laquelle il fait partie du logement du véhicule téléguidé (3) vers une position à une distance du véhicule.

2. Véhicule téléguidé selon la revendication 1, **caractérisé en ce que** le dispositif de déplacement de fumier (2) comprend un tiroir à fumier (7) qui est de préférence composé de matériau en caoutchouc ou synthétique.

3. Véhicule téléguidé selon la revendication 1 ou 2, **caractérisé en ce que** le dispositif de déplacement de fumier comprend des éléments de déplacement de fumier pouvant être entraînés par moteur et/ou une unité de pulvérisation et/ou une unité d'air comprimé.

4. Véhicule téléguidé selon la revendication 3, **caractérisé en ce que** les éléments de déplacement de fumier sont constitués de brosses.

5. Véhicule téléguidé selon l'une quelconque des revendications précédentes, **caractérisé en ce que** le dispositif de déplacement de fumier (2) comprend des moyens de régulation de pression (12) pour régler la force avec laquelle le dispositif de déplacement de fumier (2) est actif sur un sol.

6. Véhicule téléguidé selon la revendication 5, **caractérisé en ce que** les moyens de régulation de pression (12) comprennent un réservoir de commande (13).

7. Véhicule téléguidé selon l'une quelconque des revendications précédentes, **caractérisé en ce que** le véhicule téléguidé (1) comprend des moyens de détection (18) destinés à déterminer si du fumier et/ou d'autres saletés est/sont présent(es) sur le sol de l'étable.

8. Véhicule téléguidé selon la revendication 7, **caractérisé en ce que** les moyens de détection (18) comprennent une caméra, tel que par exemple une caméra infrarouge.

9. Véhicule téléguidé selon la revendication 7 ou 8, **caractérisé en ce que** les moyens de détection (18) comprennent un compteur d'humidité destiné à déterminer la conductivité électrique sur une partie du sol dans l'étable.

10. Véhicule téléguidé selon l'une quelconque des revendications précédentes, **caractérisé en ce que** le véhicule téléguidé (1) comprend un second dispositif de déplacement de fumier (6) qui est disposé sous le véhicule.

11. Véhicule téléguidé selon l'une quelconque des revendications précédentes, **caractérisé en ce que** le second dispositif de déplacement de fumier (6) constitue un support pour le véhicule.

12. Véhicule téléguidé selon l'une quelconque des revendications précédentes, **caractérisé en ce que** le véhicule téléguidé (1) comprend des moyens de nettoyage et/ou de désinfection (16).

13. Véhicule téléguidé selon la revendication 12, **caractérisé en ce que** les moyens de nettoyage et/ou de désinfection (16) comprennent une unité de pulvérisation (17).

14. Véhicule téléguidé selon la revendication 12 ou 13, **caractérisé en ce que** les moyens de nettoyage et/ou de désinfection (16) sont disposés sur le dispositif de déplacement de fumier (2).

15. Véhicule téléguidé selon l'une quelconque des revendications précédentes, **caractérisé en ce que** le véhicule téléguidé (1) comprend des moyens de signalisation (19) qui sont adaptés pour conserver les animaux à une distance du véhicule téléguidé.

16. Véhicule téléguidé selon la revendication 15, **caractérisé en ce que** les moyens de signalisation (19) émettent des signaux optiques et/ou acoustiques.

17. Véhicule téléguidé selon la revendication 15 ou 16, **caractérisé en ce que** les moyens de signalisation (19) comprennent un dispositif à choc électrique.

18. Procédé de déplacement de fumier sur un sol d'étable au moyen d'un véhicule téléguidé pourvu d'un dispositif de déplacement de fumier selon l'une quelconque des revendications 1 à 17, moyennant quoi le véhicule téléguidé et/ou l'étable est/sont pourvu(s) de moyens de détection destinés à déterminer si un animal a visité un box après que le box concerné a été nettoyé au moyen du dispositif de déplacement de fumier, alors que les moyens de détection émettent un signal de commande vers le véhicule téléguidé quand ledit animal a quitté le box, sur la base duquel signal de commande le véhicule téléguidé nettoie le box concerné à l'aide des moyens de déplacement de fumier.
